# FASCICULE DE BREVET EUROPEEN

(11) **EP 1 233 878 B1**
(45) Date de publication et mention de la délivrance du brevet: **19.03.2008**
(21) Numéro de dépôt: 00974583.7
(22) Date de dépôt: 27.10.2000
(51) Int. Cl.: B60W 30/18, B60W 10/06, B60W 10/10

(54) **PROCEDE DE COMMANDE D'UN GROUPE MOTOPROPULSEUR EN FONCTION DU MODE DE CONDUITE**
FAHRSTILABHÄNGIGES STEURUNGSVERFAHREN EINER BRENNKRAFTMASCHINE
METHOD FOR CONTROLLING AN ENGINE TRANSMISSION UNIT BASED ON ITS DRIVING MODE

(30) Priorité: 05.11.1999 FR 9913870
(43) Date de publication de la demande: 28.08.2002
(73) Titulaire: RENAULT S.A.S., 92100 Boulogne Billancourt (FR)
(72) Inventeur: AUBERT, Olivier, F-92370 Chaville (FR); TAFFIN, Christian, F-78320 Le Mesnil Saint Denis (FR)
(86) Numéro de dépôt international: PCT/FR2000/003001
(87) Numéro de publication internationale: WO 2001/032460

(56) Documents cités:
- DE-A- 4 322 476
- FR-A- 2 757 900
- US-A- 4 671 235
- US-A- 5 084 821
- US-A- 5 483 446
- US-A- 5 557 521
- US-A- 5 576 961
- US-A- 5 620 393
- US-A- 5 711 712

## Description

La présente invention se rapporte à la commande des groupes motopropulseurs de véhicule automobile.

Plus précisément, elle concerne un procédé de commande d'un groupe motopropulseur constitué d'un moteur à combustion interne et d'une transmission automatisée, dont le système de contrôle pilote d'une part le couple délivré par le moteur, et d'autre part le rapport de démultiplication de la transmission, en exploitant des signaux de commande fournis par une pédale d'accélérateur électrique.

Cette invention s'applique aussi bien avec des moteurs du type à allumage commandé équipés d'un papillon d'admission motorisé, d'un système d'injection et d'un système d'allumage piloté, qu'avec les moteurs du type à allumage par compression, équipés d'un système d'injection piloté. Elle s'applique également, dans les mêmes conditions, si la transmission est une transmission automatique à rapports étagés munie d'un convertisseur hydrocinétique de couple et d'un train épicycloïdal, ou s'il s'agit d'une boîte à baladeurs et synchroniseurs à commande robotisée, ou d'une transmission à rapport continûment variable. Enfin, le système de contrôle du groupe motopropulseur peut être constitué indifféremment d'un calculateur électronique unique, ou d'un ensemble de calculateurs échangeant des informations.

Par la publication FR 2757 900, on connaît un procédé de commande d'un moteur permettant d'adapter le lien entre la position de la pédale d'accélérateur et la position du papillon des gaz au style de conduite, selon un ensemble de règles faisant appel à la logique floue.

Par ailleurs, diverses publications, telles que la publication EP 0 777 071, proposent de contrôler le rapport de démultiplication d'une transmission automatique en l'adaptant au style de conduite du conducteur.

Par la publication WO 99 32320, on connaît un procédé de commande global du groupe motopropulseur d'un véhicule, traduisant au travers d'un processus de calcul unique la demande de puissance exprimée par le conducteur sur sa pédale d'accélérateur, en une demande de charge au moteur et en une consigne de rapport de transmission, propres à satisfaire ensemble cette demande de puissance. Toutefois, ce procédé ne prend pas en considération le style de conduite du conducteur.

La publication us 5 711 712 se rapporte à un procédé de commande conforme au préambule de la revendication 1

D'une façon générale, les méthodes connues d'adaptation de la commande du moteur ou de la transmission au style de conduite, font appel à des procédés d'identification du style de conduite spécifiques , dont la mise en oeuvre simultanée exigerait une calibration particulièrement délicate pour pouvoir obtenir la coordination souhaitée entre le moteur et la transmission.

De plus, les systèmes classiques de commande d'une transmission automatique utilisent, pour au moins une partie du processus de détermination du rapport de démultiplication, l'information délivrée par une pédale d'accélération électrique comme estimation du couple moteur, explicitement ou par l'intermédiaire de cartographies dont la calibration dépend du lien entre la position pédale et le couple moteur. Ces systèmes ne peuvent donc supporter l'introduction d'un lien variable entre la position pédale et le couple moteur, sans complexification importante, avec au minimum l'introduction de calibrations multiples.

L'invention vise à adapter simultanément au style de conduite le fonctionnement d'un moteur à combustion interne et celui de la transmission automatique qui lui est associée.

Dans ce but, elle propose que le fonctionnement du moteur d'une part, et celui de la transmission automatisée d'autre part, soient adaptés au mode de conduite du véhicule.

De préférence, le mode de conduite est déterminé par analyse des actions du conducteur sur une pédale d'accélérateur électrique.

Selon un mode de réalisation particulier de l'invention, l'information pédale brute issue de la pédale d'accélérateur est traitée pour obtenir une information pédale formatée, qui est exploitée pour moduler le couple moteur.

D'autres caractéristiques et avantages de la présente invention apparaîtront clairement à la lecture de la description suivante d'un mode de réalisation particulier de celle-ci, en liaison avec les dessins annexés, sur lesquels :
- la figure 1 illustre l'architecture d'un système de contrôle de groupe motopropulseur faisant l'objet de l'invention,
- la figure 2 présente une méthode de choix entre différents programmes moteur et transmission automatique, et
- la figure 3 montre un exemple de calibration de différentes progressivités de pédale.

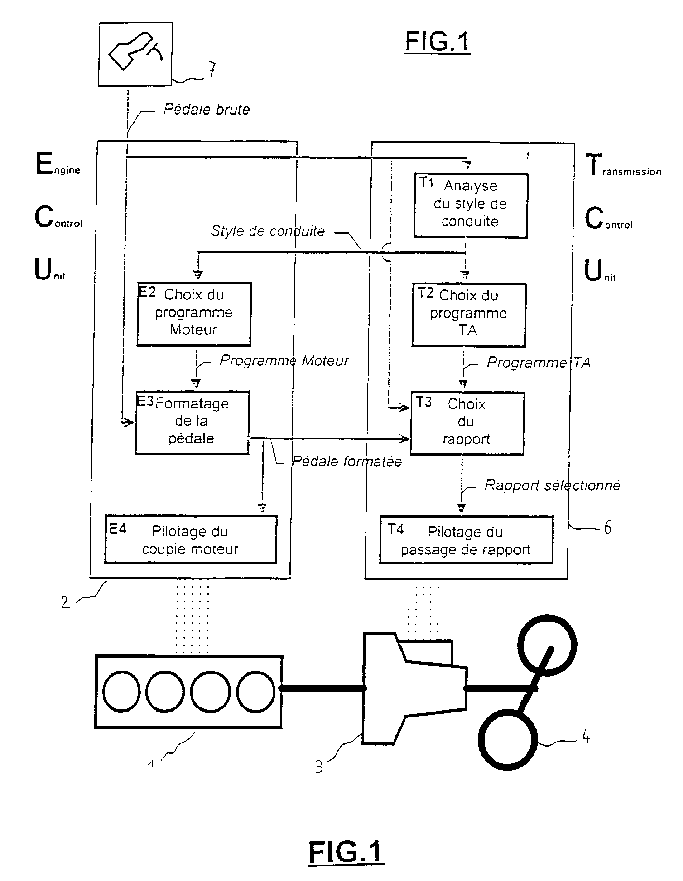

Sur la figure 1, on a décrit schématiquement une structure modulaire correspondant à la partie du système de contrôle d'un groupe motopropulseur concernée par l'invention, dont les différents blocs peuvent relever individuellement de diverses technologies connues. Dans l'exemple non limitatif de réalisation de l'invention illustré par la figure 1, le moteur 1 est un moteur à allumage commandé, muni d'un papillon motorisé, d'un système d'injection et d'un système d'allumage électroniques, pilotés par un calculateur de contrôle moteur ou ECU (« Engine Control Unit ») 2, de manière à établir une consigne interne de couple moteur.

De façon non limitative, la transmission automatique 3 de la figure 1, reliée aux roues 4 du véhicule, peut par exemple comporter un convertisseur de couple associé à un train épicycloïdal, mais également d'autres types de mécanismes de changement de vitesses. Elle est pilotée par un calculateur électronique de contrôle de transmission TCU (« Transmission Electronic Unit ») 6. Les deux calculateurs ECU et TCU sont capables d'échanger des informations, par exemple par l'intermédiaire d'un bus multiplexé.

Conformément à l'invention, l'ECU 2 transmet une information pédale brute au TCU 6, proportionnelle à la tension délivrée par la pédale d'accélérateur électrique 7, via le bus multiplexé. Au sein du TCU, un module d'analyse de style de conduite (bloc T1) utilise l'information pédale brute, parmi d'autres, pour élaborer une information style de conduite rendue ensuite disponible à l'ECU par le bus multiplexé. Sans sortir du cadre de l'invention, le module d'analyse du style de conduite peut aussi bien être implanté dans le TCU, comme dans l'exemple décrit, que dans l'ECU, sous réserve que les informations dont il a besoin lui soient fournies par le bus multiplexé. L'indicateur style de conduite varie de façon continue entre deux valeurs extrêmes, correspondant d'une part à une conduite particulièrement calme privilégiant l'économie de carburant, le silence, et le confort de fonctionnement, et d'autre part à une conduite sportive ou nerveuse, recherchant les performances et des réactions dynamiques maximales, sans se soucier du silence ou de l'économie de carburant.

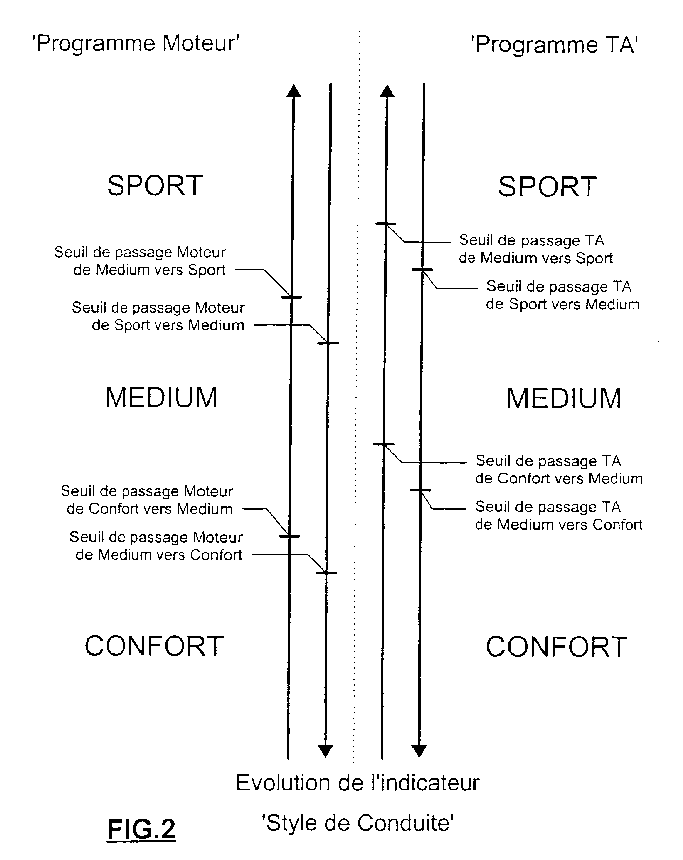

L'information style de conduite est utilisée pour sélectionner séparément un mode de fonctionnement côté moteur et côté transmission, au sein des blocs E2 de l'ECU, et T2 du TCU, qui choisissent respectivement un programme sport, médium, ou confort (cf Figure 2). Conformément à l'invention les programmes moteur et boîte peuvent différer, mais leur évolution est coordonnée par leur sélection à partir d'une information style de conduite commune.

Dans l'ECU, le module formatage de la pédale (bloc E3) applique à l'information pédale brute un formatage différent selon le programme moteur actif, transformant cette information en une information pédale formatée, qui est ensuite utilisée comme consigne pour le pilotage du couple moteur.

Au sein du TCU, la sélection du rapport de transmission (bloc T3) est modifiée en fonction du programme de transmission sélectionné, pour s'adapter au style de conduite reconnu. Les informations internes à ce bloc disposent comme indication de la volonté conducteur, de l'information pédale brute (qui donne la meilleure résolution sur les mouvements de pied du conducteur pour la détection des situations particulières de conduite), et de l'information pédale formatée, liée au couple moteur indépendamment du formatage variable, afin que celui-ci ne perturbe pas les fonctions dont la calibration est liée au couple moteur. Les deux informations pédale brute et pédale formatée sont fournies au TCU par l'ECU, au moyen du bus multiplexé.

La détermination de l'indicateur continu style de conduite peut notamment être réalisée en suivant la méthode proposée dans la publication EP 0 777 071, en logique binaire ou en logique floue, à partir des informations suivantes :
- pédale brute, utilisée de préférence à la pédale formatée comme reflet de la volonté du conducteur, afin d'éviter un bouclage dans l'analyse du style de conduite, car l'information pédale formatée dépend elle-même du mode sélectionné à partir de l'indicateur style de conduite,
- vitesse du véhicule,
- rapport engagé,
- régime moteur, et
- utilisation du frein.

Les informations qui ne sont pas directement disponibles dans le calculateur réalisant l'analyse du style de conduite sont fournies par les autres calculateurs électroniques du véhicule au moyen du bus multiplexé.

Le choix des programmes moteur (bloc E2) et TA (transmission) (bloc T2) se fait à partir de l'indicateur style de conduite (par exemple selon la méthode illustrée de façon non limitative par la figure 2), par comparaison avec des seuils de passage d'un mode à un autre, de manière à déterminer, pour chaque programme, une valeur parmi confort, médium, ou sport. Les seuils de passage utilisés pour le programme moteur et le programme TA sont différents, mais la cohérence des deux programmes est assurée par l'utilisation commune de l'indicateur style de conduite. Les seuils de passage d'un mode à l'autre comportent une hystérésis, afin d'éviter les phénomènes de commutations successives (pompage) entre les modes.

A chaque valeur du programme moteur, correspond une double calibration de la loi reliant pédale brute et pédale formatée, selon le rapport de transmission engagé (une loi pour le premier rapport, une loi pour tous les autres rapports). Ce formatage variable, tel que détaillé à titre d'exemple dans la publication FR 2757 900, a pour but d'évoluer, selon le style de conduite reconnu, entre un fonctionnement permettant le dosage fin du couple moteur, et un fonctionnement confortable plus brutal, optimisant la sensation de brio (conducteur reconnu comme sportif).

L'affectation d'un formatage spécifique au premier rapport permet de calibrer le dosage du couple moteur en phase de décollage, sans modifier le comportement « véhicule lancé », sur les autres rapports.

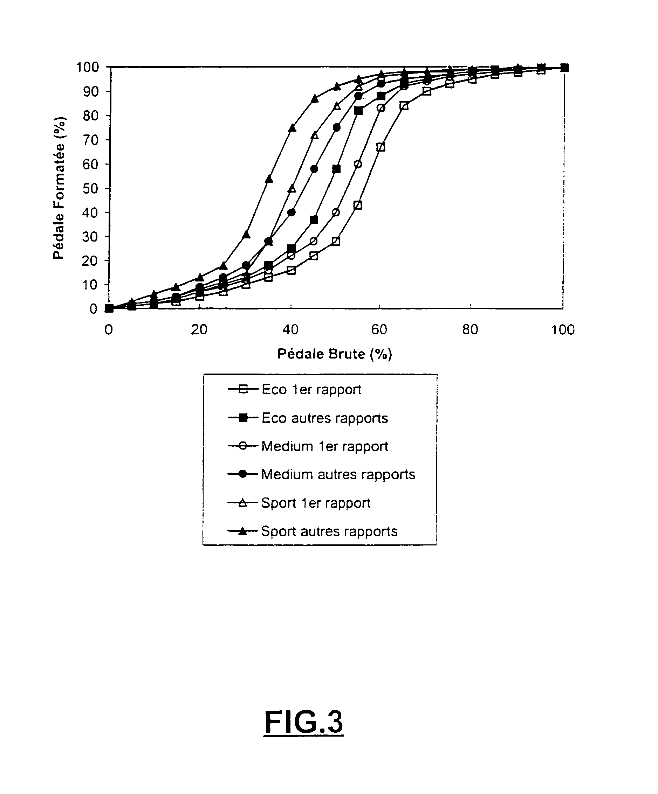

En se reportant à la figure 3, montrant un exemple non limitatif de calibration de ces différentes progressivités pédale (lien entre pédale brute et pédale formatée), on note que, pour des raisons de sécurité, toutes les calibrations associent la valeur 100% de pédale formatée à la valeur 100% de pédale brute, afin que, quel que soit le mode sélectionné, le couple maximal puisse être obtenu par enfoncement maximal de la pédale.

Au sein du TCU, la sélection du rapport de transmission se fait à partir de cartographies statiques de passages de vitesses établies dans le plan Vitesse véhicule/ Position pédale, et de corrections dynamiques, détectant et traitant certaines situations de conduite particulières (lever de pied brutal, freinage, « kick-down »).

Pour que la modification du formatage pédale par l'ECU ne perturbe pas la calibration des cartographies de passage, on utilise en entrée de ces cartographies l'information pédale formatée, dont le lien avec la demande de couple moteur du conducteur est indépendant du formatage variable. En revanche, la détection des situations particulières de conduite utilise l'information pédale brute, directement représentative des mouvements de pied du conducteur, et apportant une meilleure résolution sur les mouvements de faible amplitude. Ces corrections dynamiques utilisent également d'autres informations directement disponibles pour le TCU ou fournies par d'autres calculateurs embarqués au moyen du bus multiplexé, telles que l'activation des freins.

L'adaptation du choix du rapport de transmission au style de conduite se fait en utilisant des calibrations spécifiques pour chaque valeur du programme TA (confort médium et sport), au niveau des paramètres suivants :
- cartographies de passage de rapport (une courbe dans le plan Vitesse véhicule/ Pédale formatée par passage possible montant et descendant, et
- seuils d'activation et durées de temporisation réglant le fonctionnement des différentes corrections dynamiques.

## Revendications

1. Procédé de commande d'un groupe motopropulseur de véhicule automobile composé d'un moteur à combustion interne (1) et d'une transmission automatisée (3) pilotés par un système de contrôle électronique (2, 6), de manière telle que le fonctionnement du moteur, et celui de la transmission automatisée soient adaptés au style de conduite du véhicule, **caractérisé en ce que** le couple moteur est piloté sur la base d'une information pédale formatée, obtenue en appliquant à une information pédale brute issue de la pédale d'accélérateur un formatage différent selon la programme moteur actif, et **en ce que** l'information pédale formatée est exploitée pour déterminer le rapport de démultiplication de la transmission (3).

2. Procédé de commande selon la revendication 1, **caractérisé en ce que** le fonctionnement de la transmission (3) dépend à la fois de l'information pédale brute, et de l'information pédale formatée.

3. Procédé de commande selon la revendication 1 ou 2, **caractérisé en ce que** l'information pédale brute est exploitée pour détecter des situations particulières de conduite par analyse des actions du conducteur.

4. Procédé de commande selon les revendications 1, 2 ou 3, **caractérisé en ce que** l'information style de conduite détermine l'adoption d'un programme moteur et d'un programme transmission.

5. Procédé de commande selon l'une des revendications précédentes, **caractérisé en ce que** l'information style de conduite varie de façon continue entre deux valeurs extrêmes, correspondant respectivement à une conduite calme et à une conduite nerveuse.

6. Procédé de commande selon la revendication 4 ou 5, **caractérisé en ce que** le formatage de l'information pédale brute dépend du programme moteur actif.

7. Procédé de commande selon la revendication 4, 5 ou 6, **caractérisé en ce que** les seuils de passage entre les programmes moteurs et entre les programmes transmission sont différents.

8. Procédé de commande selon l'une des revendications 2 à 7, **caractérisé en ce que** le formatage de l'information pédale brute est différent selon le rapport de transmission engagé.

9. Procédé de commande selon l'une des revendications précédentes, **caractérisé en ce que** le style de conduite est déterminé par analyse des actions du conducteur sur une pédale d'accélérateur électrique (7).

## Claims

1. Method of controlling a power train of a motor vehicle comprising an internal combustion engine (1) and an automatic transmission (3) controlled by an electronic control system (2, 6), such that the operation of the engine, and that of the automated transmission are adapted to the driving style of the vehicle, **characterized in that** the engine torque is controlled on the basis of formatted pedal information, obtained by applying to raw pedal information obtained from the accelerator pedal a formatting that differs according to the active engine program, and **in that** the formatted pedal information is analysed to determine the gear reduction ratio of the transmission (3).

2. Control method according to Claim 1, **characterized in that** the operation of the transmission (3) depends on both the raw pedal information and the formatted pedal information.

3. Control method according to Claim 1 or 2,
**characterized in that** the raw pedal information is used to detect particular driving situations by analysing the actions of the driver.

4. Control method according to Claims 1, 2 or 3, **characterized in that** the driving style information determines the adoption of an engine program and a transmission program.

5. Control method according to one of the preceding claims, **characterized in that** the driving style information varies continuously between two extreme values, respectively corresponding to a calm driving style and to a nervous driving style.

6. Control method according to Claim 4 or 5,
**characterized in that** the formatting of the raw pedal information depends on the active engine program.

7. Control method according to Claim 4, 5 or 6, **characterized in that** the thresholds for changing between the engine programs and between the transmission programs are different.

8. Control method according to one of Claims 2 to 7, **characterized in that** the formatting of the raw pedal information differs according to the engaged transmission ratio.

9. Control method according to one of the preceding claims, **characterized in that** the driving style is determined by analysing the actions of the driver on an electric accelerator pedal (7).

## Patentansprüche

1. Steuerverfahren für ein Kraftfahrzeug-Antriebsaggregat, das aus einer Brennkraftmaschine (1) und einem Automatikgetriebe (3) gebildet ist, die durch ein elektronisches Steuersystem (2, 6) in der Weise gesteuert werden, dass die Funktion des Motors und jene des Automatikgetriebes an den Fahrstil des Fahrzeugs angepasst werden, **dadurch gekennzeichnet, dass** das Motordrehmoment anhand einer formatierten Pedalinformation gesteuert wird, die durch Anwenden einer je nach aktivem Motorprogramm unterschiedlichen Formatierung auf eine von dem Fahrpedal stammende Pedalinformation erhalten wird, und dass die formatierte Pedalinformation ausgewertet wird, um das Untersetzungsverhältnis des Getriebes (3) zu bestimmen.

2. Steuerverfahren nach Anspruch 1, **dadurch gekennzeichnet, dass** die Funktionsweise des Getriebes (3) zugleich von der rohen Pedalinformation und von der formatierten Pedalinformation abhängt.

3. Steuerverfahren nach Anspruch 1 oder 2, **dadurch gekennzeichnet, dass** die rohe Pedalinformation ausgewertet wird, um bestimmte Fahrsituationen zu erfassen, indem Aktionen des Fahrers analysiert werden.

4. Steuerverfahren nach den Ansprüchen 1, 2 oder 3, **dadurch gekennzeichnet, dass** die Fahrstilinformation die Übernahme eines Motorprogramms und eines Getriebeprogramms bestimmt.

5. Steuerverfahren nach einem der vorhergehenden Ansprüche, **dadurch gekennzeichnet, dass** die Fahrstilinformation zwischen zwei Extremwerten, die einem ruhigen Fahrstil bzw. einem sportlichen Fahrstil entsprechen, kontinuierlich veränderlich ist.

6. Steuerverfahren nach Anspruch 4 oder 5, **dadurch gekennzeichnet, dass** die Formatierung der rohen Pedalinformation von dem aktiven Motorprogramm abhängt.

7. Steuerverfahren nach Anspruch 4, 5 oder 6, **dadurch gekennzeichnet, dass** die Schwellenwerte für den Übergang zwischen den Motorprogrammen bzw. zwischen den Getriebeprogrammen verschieden sind.

8. Steuerverfahren nach einem der Ansprüche 2 bis 7, **dadurch gekennzeichnet, dass** die Formatierung der rohen Pedalinformation je nach eingelegtem Übersetzungsverhältnis verschieden ist.

9. Steuerverfahren nach einem der vorhergehenden Ansprüche, **dadurch gekennzeichnet, dass** der Fahrstil durch die Analyse von durch den Fahrer veranlassten Betätigungen eines elektrischen Fahrpedals (7) bestimmt wird.
